# EUROPEAN PATENT APPLICATION

(11) **EP 0 989 562 A2**
(43) Date of publication of application: **29.03.2000**
(21) Application number: 99105270.5
(22) Date of filing: 15.03.1999
(51) Int. Cl.: G11B 23/50

(54) **Audio-video disc repair apparatus**

(30) Priority: 25.09.1998 US 161248
(71) Applicant: Akob, Juliet, Canoga Park, CA 91303 (US)
(72) Inventor: Akob, Juliet, Canoga Park, CA 91303 (US)
(74) Representative: Baillie, Iain Cameron

(57) **Abstract**

An upwardly facing rotating abrasive wheel assembly has a foam pad topped by abrasive paper. The abrasive wheel assembly is removably mounted in a motor-driven cup. The abrasive wheel assembly can be changed to change the grade of abrasive paper or to renew the abrasive paper. The ROM disc to be repaired is downwardly facing and is rotatably mounted on a ROM disc carrier. The ROM disc carrier is lowered until the ROM disc is in face-to-face abrading relationship with the upwardly facing abrasive wheel assembly. The interengagement rotates the ROM disc so that even abrasion of the ROM disc protective layer is achieved. After a short run with the coarse abrasive, a fine abrasive is substituted to provide a finished surface. If desired, the surface can be buffed with a sheep's wool pad substituted for the abrasive wheel assembly. Proper repair is quickly and easily achieved.

## Description

### FIELD OF THE INVENTION

This invention is directed to an apparatus to repair the surface smoothness of scratched digital audio and video discs.

### BACKGROUND OF THE INVENTION

Read-only memories on discs are available in several sizes. The discs carry audio and/or video information in digital form. The discs are manufactured by pressing a disc of soft synthetic polymer composition material with the digital information. The digital information is made readable by applying a thin layer of reflective metallic material. The whole face is covered with an optically clear protective layer. The data impressed on the disc is impressed in a continuous spiral data track in the smaller sizes of compact disc, usually used for audio information storage or computer data read-only memory storage. Video compact discs are of a larger diameter and usually store the data in the form of concentric circles.

Reading the discs is carried out by laser beam scanning of the information in the data-impressed layer. The metallic reflective layer permits the scanning through the clear protective layer. The reflected beam is picked up by the disc-reading device and converted into the desired signal.

Damages to the clear protective layer disturb the scanning process. In audio devices audible clicks or omission-sounds occur. The disc-reading devices sometimes have circuitry to overcome the incorrect reading, but such error correction circuits cannot correct above a predetermined level of error signal.

It is scratches in the clear protective layer which cause such problems. The reading face of the disc is not intended to be touched, but scratches in the protective layer disturb the reading beam. The reading beam usually has a diameter of about 1.6 microns and scans the data track of about 0.6 micron in width. The clear protective layer is about 1.2 millimeters thick so that scratches therein may deflect the, reading beam to such an extent that the beam no longer makes contact with the data track to be read. Thus, the data is not read. In order to overcome this, it is usual for playback devices to have at least two additional beams, one on each side of the reading beam, with one of them in front and the other behind the reading beam. The two additional beams normally run between the neighboring data tracks, but when the reading beam is deflected by a scratch, one of these additional beams may supply the necessary data. The electronics of the system thus can overcome small data errors. Such error correction systems are all limited in the amount of correction which can be achieved.

Even when the user of the disc is its owner, and he applies the highest standards of care, there is still a chance that the disc can receive a surface scratch on its reading surface. However, many of such discs are placed in the hands of a user on a rental basis and such discs are likely to incur a more difficult handling environment. Such rental more often occurs with video discs and those are of higher cost. In order to obtain maximum life from such rental discs, in order to receive the best return on the investment of its purchase, the disc owner must have the opportunity to polish out scratches which do not reach as deep as the data surface. There are several polishing machines on the market, but such are difficult to operate and are slow in producing results. Some of them use liquid or abrasive slurry in the polishing process. Such require substantial environmental care to limit the distribution of the waste material. Such also require cleaning of the disc after polishing. The fact that such prior machines take a long time to do the polishing makes them uneconomic. The video disc original purchase price and its rental price are not sufficiently great to spend much time and money on its repair. Thus, most of the present machines are priced out of the market. Furthermore, when several different polishing grits are required over the polishing time period, multiple machines are usually necessary. This further multiplies the cost of economically achieving disc repair.

Accordingly, there is a need for a disc repair apparatus which is fast and easy to use so that repairs are quickly and economically achieved.

### SUMMARY OF THE INVENTION

In order to aid in the understanding of this invention, it can be stated in essentially summary form that it is directed to a read-only memory ROM disc repair apparatus which includes a motor-driven pad which carries an abrasive sheet. The pad can be interchanged with other pads which have abrasive sheets having finer abrasive grades or buffing materials. The abrasive sheet faces upwardly. A carrier with a freely rotatable parallel spindle carries the ROM disc to be polished. A post guides the carrier with the ROM disc as it moves downward with gravitational force. The ROM disc overlaps only a segment of the abrasive sheet. The weight of the carrier holds the ROM disc against the abrasive sheet. The ROM disc freely rotates in response to the rotation of the abrasive sheet due to merely the frictional engagement between the ROM disc and the abrasive sheet. After a short abrading action, the ROM disc and its carrier can be moved to another machine with a finer grit or the pad and abrasive sheet are exchanged for a finer grit. In this way the ROM disc is progressively polished by a succeeding finer abrasive. A final step with a buffing pad and wax is optional.

It is thus a purpose and advantage of this invention to provide an audio-video ROM disc repair apparatus which can quickly repair scratches in the transparent protective layer on the reading surface of the ROM disc to economically remove scratches therefrom.

It is another purpose and advantage of the invention to provide a ROM disc repair apparatus which is of simple construction so that they can be economically produced and widely used, possibly with a plurality of such apparatus in the same processing shop so that the ROM may be advanced from one to the next with successively finer abrasive sheets so that abrasive sheets do not need to be changed.

It is a further purpose and advantage of the invention to provide a ROM disc holder which can be moved from one machine to the next to successively apply the ROM disc to finer abrasive sheets so that the ROM disc need only be installed once and successively moved to additional machines without additional disc handling.

It is a further purpose and advantage of the invention to provide a ROM disc repair apparatus in which a motor-driven pad carries an abrasive sheet and this pad can be removed and replaced by another similar pad. The pads carry abrasive sheets for successively finer abrasive action.

It is a further purpose and advantage of the invention to provide a ROM disc repair apparatus which avoids the use of abrasive slurry and avoids the use of polishing liquid so that, when the ROM disc is removed from the disc repair apparatus, it is immediately ready for use without the need for additional cleaning.

It is a further purpose and advantage of the invention to provide a ROM disc repair apparatus which can be quickly operated by unskilled personnel so that ROM disc repairs can be economically achieved.

The features of the present invention which are believed to be novel are set forth with particularity in the appended claims. The present invention, both as to its organization and manner of operation, together with further purposes and advantages thereof, may be best understood by reference to the following description, taken in conjunction with the accompanying drawings.

### BRIEF DESCRIPTION OF THE DRAWINGS

FIGURE 1 is a perspective view of the audio-video ROM disc repair apparatus of this invention, with the cover raised.
FIGURE 2 is a plan view of the active face of a ROM disc having handling scratches to be repaired by having the scratches polished therefrom.
FIGURE 3 is an enlarged exploded view of the ROM disc repair apparatus.
FIGURE 4 is a plan view of the apparatus in polishing operation, with parts broken away.
FIGURE 5 is an enlarged side elevational view taken along line 5-5 of FIGURE 4, with parts sectioned and broken away.
FIGURE 6 is an enlarged section taken along line 6-6 of FIGURE 5, with parts broken away.

### DESCRIPTION OF THE PREFERRED EMBODIMENT

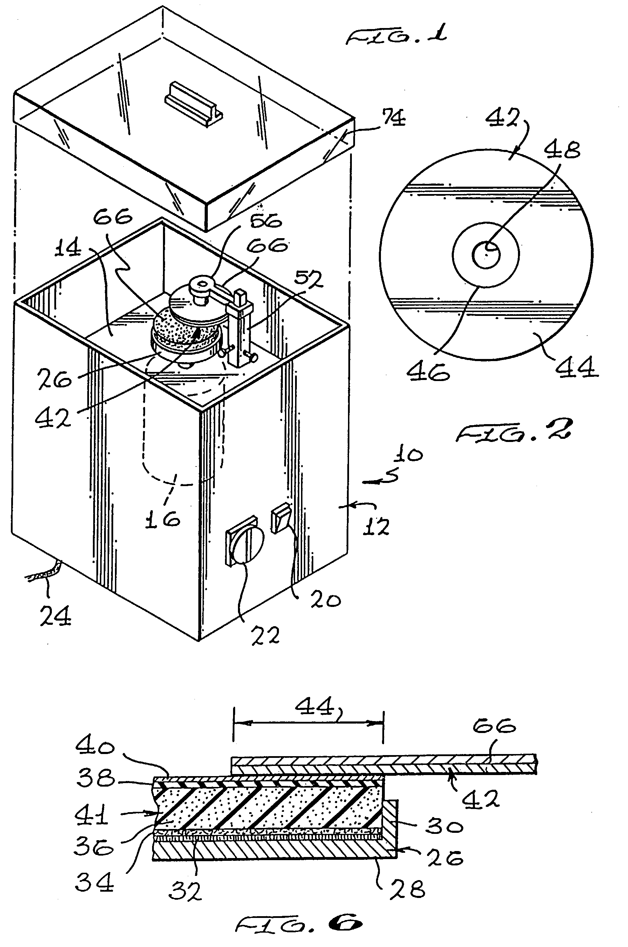

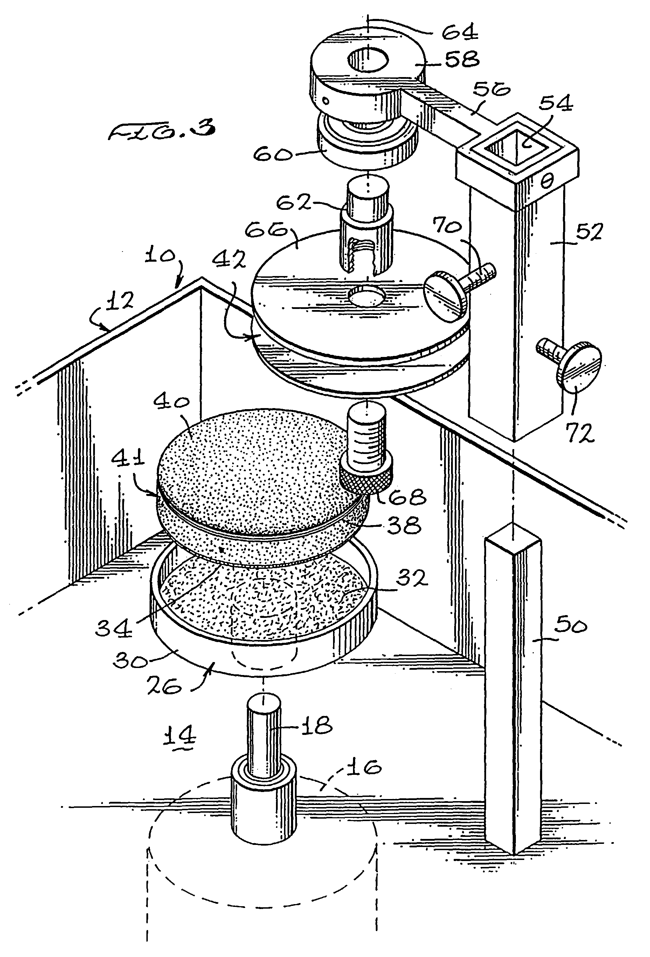

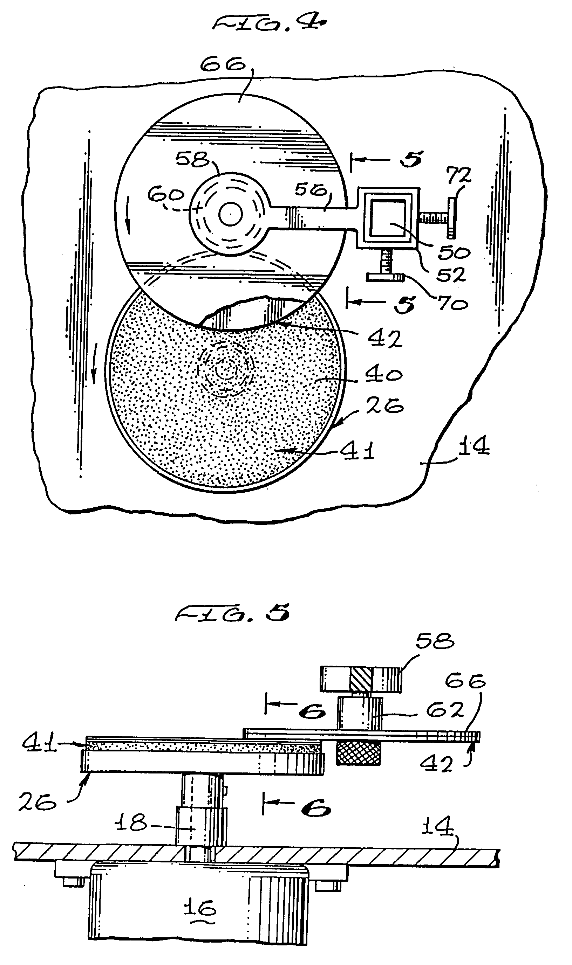

The audio-video disc repair apparatus of this invention is generally indicated at 10 in FIGURES 1 and 3. Housing 12 has a floor 14 below which is mounted electric motor 16. The electric motor has a gear box within its housing so that its output shaft 18 runs at about 100 rpm. The output shaft extends upward through floor 14, see FIGURE 5. The motor with its gear box are mounted on the underside of floor 14, as seen in FIGURE 5. The shaft 18 extends substantially vertically. Within the housing 12, below floor 14, is contained the wiring and electrical controls for the motor. On/off switch 20 is attached to the front housing 12 so that it is accessible to the operator. In addition, motor operation timer 22 is also attached to the housing in a position where it can be managed by the operator. Power cord 24 permits delivery of electric power to the housing and through the controls therein to the motor.

Above the floor 14, drive cup 26 is mounted on the shaft 18 to rotate with the shaft 18 on its vertical axis. Drive cup 26 has a flat bottom 28 and cylindrical side wall 30, see FIGURE 6. Adhesively attached to the bottom, within the side walls, is layer 32 of hook and pile fastener.

The other layer 34 of the hook and pile fastener lies directly thereon to be detachably attached. Foam layer 36 is a cylindrical disc of fairly hard synthetic polymer composition foam. The fastener layer 34 is attached thereto, such as by adhesive. On top of foam layer 36 is attached a firm rubber sheet layer 38. The whole structure is formed so that the top of the rubber sheet layer 38 is flat, planar and at a right angle to the axis of rotation of the drive cup 26. This structure serves as support for the abrasive layer 40. The abrasive layer is a paper sheet with the abrasive grit attached thereto. The grit of the abrasive layer is dependent upon whether or not the repair step is an initial rough step, for removing material or a subsequent fine grit step for smoothing. The rough cutting abrasive is preferably about 400 grit. A commercial dry abrasive paper can be used. The abrasive paper sheet is removably adhesively attached to the rubber sheet layer 38 as by pressure-sensitive adhesive. Due to the structure, the upwardly directed abrasive face of the abrasive layer is substantially planar. The structure from fastener layer 34 up through the abrasive sheet 40 is a replaceable abrasive wheel assembly 41.

The abrasive wheel assembly 41 can be quickly changed by separating the hook and pile fastener layer 34 from the hook and pile fastener layer 32 in the cup 28. After a rough cutting step, the abrasive wheel assembly can be changed to an abrasive wheel assembly having a finer abrasive paper. For finish work, to make a surface sufficiently smooth for data reading, the abrasive is 2,500 grit. Again, a commercial dry abrasive paper is suitable. The abrasive wheel assembly 41 is comprised of the upper half of the hook and pile fastener, foam layer 36, rubber sheet layer 38 and abrasive sheet layer 40. The removal of one abrasive wheel assembly for another may either be for change to a different grit of abrasive or repair of the abrasive wheel assembly by removing and adhesively replacing the abrasive layer 40 thereon. Preferably, the abrasive layer sheet 40 is supplied with pressure-sensitive adhesive on its back surface for ease of application and removal.

A read-only memory (ROM) digital disc 42 is shown in FIGURES 2, 3, 5 and 6. Its reading surface 44 is radially outward from an interior circular blank area as defined by line 46. Since the area inside the circle 46 does not need to be repaired, it need not be reached for polishing. The round disc has an interior central hole 48.

Post 50 is secured to the floor 14 and extends upwardly parallel to the axis of rotation of the motor shaft 18. Carrier 52 has an interior opening 54 therein which is sized to slide down on post 50. The post 50 is non-round and the opening 54 corresponds thereto. A square post and square opening are shown, although any structure which permits free up-and-down motion of the carrier 52 on post 50, without rotation, is useful. For example, splined or keyed interengagement could alternatively be used. Arm 56 extends laterally from carrier 52. Bearing cup 58 is mounted on the end of arm 56 and contains bearing 60. Rotor 62 is mounted in bearing 60 so that it is freely rotatable on an axis 64 which is parallel to the rotational axis of the abrasive wheel assembly 41. Backing plate 66 is secured to rotor 62 so that its lower face is flat and perpendicular to the rotational axis.

The ROM disc 42, with its active face downward, is placed against the lower face of backing plate 66. It is secured in place by machine screw 68. The threaded shaft of the machine screw passes through the central opening 48 in the ROM disc and through the central opening in backing plate 66 and engages in the threads in the bore within rotor 62. The machine screw holds the ROM disc in place so that it can rotate with backing plate 66.

The lateral positioning of the two axes is such that, when a ROM disc is in place and the carrier 52 slides down post 50, the head on machine screw 68 clears cup 26, see FIGURE 5. In this position, the entire radius of a segment of the reading area of the ROM disc is facing the abrasive wheel assembly 41, see FIGURES 4 and 5.

In operation, the operator removes the carrier assembly from the post 50 by lifting it off. He turns it over, places the ROM disc to be polished on the backing plate 66 and secures it there with machine screw 68. With the carrier assembly off of its post 50, the abrasive assembly 41 is placed in drive cup 26. An abrasive assembly with the correct abrasive grit is used. The carrier is simply put into place with the carrier 52 moving down on post 50. When the face of the CD ROM disc lies against the abrasive assembly, thumb screws 70 and 72 are tightened to prevent wobble of the carrier assembly and to rigidize the entire structure before the motor is started. With a 400 grit abrasive layer, about 100 rpm of the abrasive wheel assembly and about 15 total ounces of weight of the carrier assembly including the ROM disc, 30 seconds of abrading is sufficient. During abrading, the cover 74 is placed over housing 12 to control the dust which results from the abrading. After 30 seconds of abrasion, the motor is turned off, the carrier assembly is loosened and raised, and the abrasive wheel assembly is changed to one having an abrasive paper of 2,500 grit. When this new finer abrasive wheel assembly is installed, the carrier assembly is brought back so that the carrier 52 slides down on its post 50. Again, the carrier assembly is supported by the force of the ROM disc against the abrasive wheel assembly 41 and the screws 70 and 72 are locked for the second abrasion. The motor is started again and, with 2,500 grit abrasive and the conditions described above with respect to the rough abrasion, this finish abrasion is accomplished in 30 seconds. This treatment is sufficiently long to remove most scratches from the protective layer on the ROM disc 42 and provide sufficient smoothness so that the ROM disc can be used for reading its memory.

It should be noted that the free rotation of the ROM disc 42 with its backing plate 66 and rotor 62 permits the abrasive assembly 41 to rotate the ROM disc due to the frictional engagement between the ROM disc 42 and the abrasive assembly 41. Since both are rotating, even abrasive wear is achieved over the contact area. Furthermore, the relative motion of the abrasive with respect to the ROM disc has a significant portion of radial direction of movement with respect to the ROM disc, which is the desirable direction of polishing.

An optional additional step can be provided. A third wheel assembly 41 can be provided with a sheep's wool bonnet mounted thereon instead of an abrasive paper, together with wax. This buffing assembly is substituted for the abrasive assembly and the process is again repeated. By using a sheep's skin bonnet together with wax, after 10 seconds of machine work under the conditions described with respect to the abrasive work, a highly buffed and shiny surface is achieved. This surface makes it visually easier to be assured that all scratches have been removed.

The two-step process of rough and fine abrasives cuts down the machine time. Of course the scratches could be removed with only an abrasive wheel assembly carrying the finer abrasive grit, but the time would be much longer. The innovative design of the machine which makes it easy to change the abrasive grit cuts down on the total time of repairing the disc. Another alternative is to have three machines in a row and place the ROM disc on a carrier. The disc and carrier are installed in the first machine with the less fine abrasive for 30 seconds, then placed in the second machine with the fine abrasive and then placed in the third machine with the buffing bonnet. In such case, the disc carrier would be successively installed in the three machines. This would save operator time by avoiding changing the abrasive assembly between discs. When the abrasive becomes less sharp and is losing its cutting effectiveness, the abrasive wheel assembly can be changed. As a separate step, away from the apparatus 10, the abrasive layer 40 can be stripped from the rubber sheet layer 38 and replaced by a new abrasive layer which normally will be provided with pressure-sensitive adhesive for easy and rapid attachment. The disc is quickly repaired without adhesive paste or slurry and without water for washing. Thus, additional difficulties are avoided.

This invention has been described in its presently contemplated best embodiments and it is clear that it is susceptible to numerous modifications, modes and embodiments within the ability of those skilled in the art and without the exercise of the inventive faculty. Accordingly, the scope of this invention is defined by the scope of the following claims.

## Claims

1. An audio-video disc repair apparatus comprising:
an abrasive wheel assembly having an upwardly facing abrading face, means for rotating said abrasive wheel assembly on an axis;
a ROM disc carrier, said ROM disc carrier having means thereon for detachably attaching a ROM disc thereon with its active ROM surface facing downwardly, said means permitting free rotation of said ROM disc;
means for guiding said ROM disc carrier on a path so that the active face of the ROM disc engages said abrading face of said abrasive wheel assembly so the rotation of said abrasive wheel assembly causes rotation of said ROM disc and said ROM disc carrier for uniform abrasive wear on the active face of the ROM disc.

2. The disc repair apparatus of Claim 1 wherein said abrasive wheel assembly comprises a synthetic polymer foam with abrasive paper adhesively attached thereto.

3. The disc repair apparatus of Claim 1 wherein said abrasive wheel assembly comprises a foam pad with a rubber-like sheet layer thereon together with paperbacked abrasive adhesively attached to said rubber-like layer.

4. The disc repair apparatus of Claim 3 wherein said means for rotating said abrasive wheel assembly is an electric motor and there is a cup mounted to be rotated by said electric motor, said abrasive wheel assembly being detachably mounted within said cup.

5. The disc repair apparatus of Claim 4 wherein said detachable mounting of said abrasive wheel assembly within said cup comprises a hook and pile fastener with one portion of said fastener attached within said cup and the other portion of said fastener attached to said foam pad so that said abrasive wheel assembly can be quickly and easily removed from said cup and another abrasive wheel assembly can be quickly and easily placed in said cup for change of grade of abrasive.

6. The disc repair apparatus of Claim 5 wherein said ROM disc carrier guide means comprises a post mounted with respect to said means for rotating said abrasive wheel assembly, said post being substantially parallel to the axis of rotation of said abrasive wheel assembly.

7. The disc repair apparatus of Claim 1 wherein said ROM disc carrier guide means comprises a post mounted with respect to said drive means, said post being substantially parallel to the axis of rotation of said abrasive wheel assembly.

8. The disc repair apparatus of Claim 7 wherein said disc carrier includes a carriage which slides with respect to said post, said carriage having a bearing which rotatably carries a rotor upon which the ROM disc to be repaired is mounted.

9. The disc repair apparatus of Claim 8 wherein said bearing on said carriage rotates on an axis substantially parallel to the axis of rotation of said abrasive assembly.

10. The disc repair apparatus of Claim 8 wherein a backing plate is mounted to freely rotate on said bearing on said carriage, said backing plate being positioned so that a ROM disc to be repaired can lie thereagainst during abrasive polishing.

11. The disc repair apparatus of Claim 10 wherein a detachable clamp is positioned to clamp the ROM disc against said backing plate.

12. An audio-video disc repair apparatus comprising:
an electric motor, a substantially vertical shaft driven by said motor so that said shaft rotates around an upright axis;
an abrasive assembly carried on said shaft and rotated by said shaft, said abrasive assembly having an upwardly directed abrasive face;
guide means adjacent said shaft, a ROM disc carrier movably mounted on said guide means, said ROM disc carrier having a rotating bearing therein and having a backing disc mounted to rotate on said bearing, means for removably mounting a ROM disc against said backing disc, said guide means being positioned with respect to said abrasive assembly such that, when said carrier is mounted on said guide means, a ROM disc mounted on said backing plate moves to contact said abrasive assembly so that, when said abrasive assembly rotates, said ROM disc backing plate and the ROM disc rotate to cause the even distribution of abrasive wear on the ROM disc.

13. The disc repair apparatus of Claim 12 wherein said carrier mounting means is a post substantially parallel to the rotational axis of said shaft carrying said abrasive assembly.

14. The disc repair apparatus of Claim 12 wherein said ROM disc carrier is detachable from said post and there is clamp means between said carrier and said post for clamping said carrier in position during rotation.

15. The disc repair apparatus of Claim 12 wherein only the weight of said disc carrier causes force of the disc against said abrasive assembly so that abrasive force can be controlled.

16. The disc repair apparatus of Claim 12 wherein said abrasive assembly comprises a foam layer and means for detachably mounting said foam layer with respect to said abrasive assembly drive shaft.

17. The disc repair apparatus of Claim 12 wherein a cup is mounted on said shaft and said abrasive assembly comprises a foam layer positioned within said cup, said foam layer being detachably secured within said cup, said foam layer having an upper face and said upper face carrying abrasive coated paper.

18. The disc repair apparatus of Claim 12 wherein said abrasive assembly includes a foam layer rotatably driven by said shaft, said foam layer having an upper face with a rubber-like sheet layer thereon, together with abrasive coated paper adhesively attached to said rubber-like sheet layer.

19. The disc repair apparatus of Claim 18 wherein said abrasive assembly is detachably attached to be driven by said shaft.

20. The disc repair apparatus of Claim 19 wherein said abrasive assembly lies within a cup, said cup being driven by said shaft, said abrasive assembly being detachably attached within said cup by means of a hook and pile fastener.
